# EUROPÄISCHE PATENTSCHRIFT

(11) **EP 2 011 675 B1**
(45) Veröffentlichungstag und Bekanntmachung des Hinweises auf die Patenterteilung: **04.01.2012**
(21) Anmeldenummer: 08011648.6
(22) Anmeldetag: 27.06.2008
(51) Int. Cl.: B60H 1/00

(54) **Klimaanlage**
Air conditioner
Climatiseur

(30) Priorität: 04.07.2007 DE 102007031250
(43) Veröffentlichungstag der Anmeldung: 07.01.2009
(73) Patentinhaber: Behr GmbH & Co. KG, 70469 Stuttgart (DE)
(72) Erfinder: Dieksander, Wolfgang, 71711 Steinheim/Murr (DE); Litwing, Erich, 73565 Spraitbach (DE); Schweizer, Gebhard, 71229 Leonberg (DE)

(56) Entgegenhaltungen:
- DE-A1-102005 029 773
- DE-A1-102007 019 382
- JP-A- 55 051 615
- US-A1- 2001 025 502
- US-A1- 2005 263 277
- US-B1- 6 581 678

## Beschreibung

Die vorliegende Erfindung betrifft eine Fahrzeug-Klimaanlage gemäß dem Oberbegriff des Anspruchs 1.

Klimaanlagen, wie sie bei Fahrzeugen verwendet werden, weisen üblicherweise einen Verdampfer und einen Heizer auf, die in einem Luftführungsgehäuse angeordnet sind, wobei die gesamte von einem Gebläse kommende Luft den Verdampfer durchströmt und - je nach Betriebszustand - durch den Heizer oder über einen Bypass am Heizer vorbei geleitet wird, wobei für eine Mischtemperierung eine Aufteilung des Luftstroms vorgesehen ist. Zur Erhöhung des Komforts sind zudem mehrzonige Klimaanlagen bekannt, bei denen Trennwände im Luftführungsgehäuse vorgesehen sind. Die Trennwände beginnen üblicherweise hinter dem Verdampfer und vor dem Heizer, wobei je nach Zonenzahl und -aufteilung die unterschiedlichsten Verläufe bekannt sind. In der Regel ist eine Mitteltrennwand für eine Unterteilung der Fahrer-und Berfahrerseite sowohl für den Front- als auch den Fondbereich vorgesehen. Diese Trennwand verläuft üblicherweise vertikal und entlang der Mittellängsebene des Fahrzeugs. Ferner ist üblicherweise eine Trennwand für eine Unterteilung des Front- und des Fondbereichs vorgesehen. Diese Trennwand verläuft üblicherweise etwa waagerecht im eingebauten Zustand der Klimaanlage. Um die Luft, welche durch den Heizer strömt mit der den Heizer über einen Bypass umströmenden Kaltluft im Falle einer Mischtemperierung zu vermischen und die temperierte Luft auf die einzelnen Öffnungen im Luftführungsgehäuse zu verteilen, von denen aus die temperierte Luft dem Fahrzeuginnenraum an verschiedenen Stellen der einzelnen Zonen zugeführt wird, ist für jede Zone ein Mischraum vorgesehen. Ferner sind Bypässe bekannt, um insbesondere im Frontbereich eine Temperaturschichtung zu erreichen, d.h. die Temperatur im Fußraum unterscheidet sich von der Temperatur im Kopfbereich.

Aus der DE 10 2005 029 773 A1 ist eine derartige Kraftfahrzeug-Klimaanlage mit einem Luftführungsgehäuse und in demselben angeordnete Komponenten, wie mindestens einem Heizer und einem Einlegeteil zur Luftführung und/oder -mischung bekannt. Hierbei lässt sich die Klimaanlage von einer mehrzonigen Klimaanlage in eine wenigerzonige Klimaanlage durch miteinander verbindbare Elemente umwandeln. Die Aufteilung in einzelne Klimazonen erfolgt mittels Trennwänden im Luftführungsgehäuse, die Teil des Einlegeteils sind. Vertikal im Luftführungsgehäuse angeordnete Trennwände trennen die Fahrer- und Beifahrerseite voneinander. Horizontal angeordnete Trennwände trennen den Front- vom Fondbereich. Die Warmluft oder temperierte Luft der einzelnen, den entsprechenden Klimazonen I bis IV zugeordneten Bereiche des Luftführungsgehäuses wird anschließend an einen Mischraum, geregelt durch einzelne Klappen, auf die entsprechenden Luftkanäle, wie beispielsweise dem Fondbelüftungsluftkanal und Fondfußraumluftkanal der Beifahrerseite, oder den Luftkanälen zur fahrerseitigen Frontbelüftung (Mittel- und Seitendüsen), dem Fußraum und dem Defrostkanal, die zu der entsprechenden Klimazone führen, verteilt. Um eine Temperaturschichtung der Luft zu ermöglichen, kann Kaltluft beigemischt werden.

Aus der DE 10 2007 019 382 A1 ist eine mehrzonige Kraftfahrzeug-Klimaanlage mit mindestens einem Heizer und mindestens einem Verdampfer bekannt, die in einem Luftführungsgehäuse angeordnet sind, wobei im Inneren des Luftführungsgehäuse mindestens eine Trennwand vorgesehen ist, welche das Luftführungsgehäuse in mindestens zwei Bereiche unterteilt und dadurch den dem Fahrzeuginnenraum zuzuführenden Luftstrom in Teilluftströme auftrennt, die in dem Luftführungsgehäuse konditioniert und anschließend Klimazonen zugeführt werden. Hierbei zweigt von mindestens einem Bereich des Luftführungsgehäuses ein Luftkanal ab, der einen konditionierten Teilluftstrom einer anderen Klimazone des Fahrzeuginnenraums zuführt als der oder die anderen Luftkanäle, die von diesem besagten Bereich des Luftführungsgehäuses abzweigen. Beim besagten Luftkanal handelt es sich vorzugsweise um den Luftkanal, der zum Front-Fußraum führt. Dies ermöglicht eine Unterteilung der Frontzonen in eine obere Teil-Klimazone (Mittel- und Seitendüse) und eine untere Teil-Klimazone (Fußraum), wobei die Versorgung mit unabhängig voneinander temperierter Luft möglich ist. Eine derartige Klimaanlage ist jedoch relativ komplex in ihrem Aufbau und die Regelung der Temperierung lässt Wünsche offen, insbesondere im Falle einer luftseitig geregelten Klimaanlage, bei welcher häufig bei der Abstimmung der Klappenbewegungen oder der Regelcharakteristiken aufwendige Entwicklungsarbeiten erforderlich sind. Ferner sind bei veränderten Randbedingungen im Fahrzeug Abstimmungsarbeiten notwendig.

US 2001/025502 offenbart eine Klimaanlage nach dem Oberbegriff des Anspruchs 1.

Es ist die Aufgabe der Erfindung, eine verbesserte Klimaanlage, insbesondere eine mehrzonige Klimaanlage für ein Fahrzeug, vorzusehen. Die Klimaanlage soll insbesondere robust gegen veränderliche Randbedingungen sein.

Diese Aufgabe wird gelöst durch eine Klimaanlage mit den Merkmalen des Anspruchs 1. Vorteilhafte Ausgestaltungen sind Gegenstand der Unteransprüche.

Die Erfindung betrifft eine mehrzonige Fahrzeug-Klimaanlage mit einem Luftführungsgehäuse, mindestens einem im Luftführungsgehäuse angeordneten Verdampfer und mindestens einem im Luftführungsgehäuse angeordneten Heizer, wobei ein Luftstrom, welcher durch die Klimaanlage geleitet wird, durch Wände in mindestens zwei Teilluftströme aufgeteilt ist, und die Teilluftströme über mittels Absperrklappen geregelte Öffnungen und nachfolgend angeordnete Luftkanäle dem Fahrzeuginnenraum zuführbar sind, wobei mindestens eine Wand, welche zwei Teilluftströme voneinander trennt, innerhalb eines einer Zone der Klimaanlage zugeordneten Bereichs vorgesehen ist, und dass die benachbarten Teilluftströme, welche durch die innerhalb einer Zone liegende Wand voneinander getrennt sind, unterschiedlich temperierbar sind. Eine derartige Unterteilung des Luftstroms in eine Mehrzahl von Teilluftströmen vereinfacht die Regelung der Temperatur an den einzelnen Ausströmern erheblich, auch wenn sie mit einem gewissen Mehraufwand an Material verbunden ist. Ebenfalls vereinfacht sich die Ausgestaltung der Mischräume, in denen die kalte und warme Luft miteinander bei einem Mischbetrieb vermischt wird, und es kann ohne Aufwand sichergestellt werden, dass an der durch eine Absperrklappe verschließbaren Öffnung des Luftführungsgehäuses, die über einen Luftkanal mit dem entsprechenden Ausströmer verbunden ist, die gewünschte Lufttemperatur vorhanden ist, auch wenn die Klappenstellungen benachbarter Absperrklappen, welche Öffnungen in benachbarten Mischräumen freigeben oder verschließen können, verändert werden.

Besonders bevorzugt ist hierbei zumindest die innerhalb eines einer Klimazone zugeordneten Bereichs angeordnete Wand durch einen getrennt ausgebildeten Gehäuseeinsatz gebildet. Dies ermöglicht eine Ausgestaltung der Klimaanlage in einer Art Baukastensystem, wobei in der Basisvariante ohne Wände keine Temperaturschichtung vorgesehen ist, gegebenenfalls sogar keine Aufteilung in Klimazonen.

Vorzugsweise ist jedem Teilluftstrom ein Mischraum zugeordnet, von dem aus über eine oder mehrere Öffnungen die Luft über nachfolgend angeordnete Luftkanäle dem Fahrzeuginnenraum zuführbar ist, wobei im Falle von mehreren Öffnungen für einen Teilluftstrom alle Luftkanäle vom entsprechenden Mischraum im wesentlichen in einer Ebene des Fahrzeuginnenraums in der gleichen Klimazone angeordnete Ausströmer aufweisen. Eine derartige Ausgestaltung ermöglicht eine stark vereinfachte Temperaturabstimmung.

Im Luftführungsgehäuse sind vorzugsweise mindestens vier, insbesondere mindestens fünf parallel zueinander verlaufende Teilluftströme vorgesehen, wobei mindestens zwei, insbesondere mindestens drei, der Teilluftströme dem Frontbereich und mindestens zwei der Teilluftströme dem Fondbereich zugeordnet sind, insbesondere bevorzugt jeweils sowohl auf der Fahrerseite als auch auf der Beifahrerseite, d.h. die Ausgestaltung ist auf der Fahrer-und Beifahrerseite spiegelbildlich oder nahezu spiegelbildlich.

Erfindungsgemäß ist im Luftführungsgehäuse für jeden Teilluftstrom mindestens eine Temperaturklappe vorgesehen, mit welcher die Luftverteilung auf den Heizer und den Bypass um den Heizer herum regelbar ist. Eine besonders einfache Regelung ergibt sich durch das Vorsehen von zwei starr miteinander in einer vorgegebenen Winkelstellung der Klappenflächen verbundenen Temperaturklappen für einen Teilluftstrom.

Gemäß einer bevorzugten Ausgestaltung der Fahrzeug-Klimaanlage, bei der ein Luftstrom, welcher durch die Klimaanlage geleitet wird, durch Wände in mindestens zwei Teilluftströme aufgeteilt ist, und die Teilluftströme über mittels Absperrklappen geregelte Öffnungen und nachfolgend angeordnete Luftkanäle dem Fahrzeuginnenraum zuführbar sind, ist in mindestens einer der Wände in Luftströmungsrichtung gesehen hinter dem Verdampfer und Heizer, also im sogenannten Mischraum oder -bereich, mindestens eine Klappe angeordnet, welche eine Öffnung in der Wand verschließt oder freigibt, über welche eine Querströmung eines der temperierten Teilluftströme möglich ist, so dass sich der überströmende, temperierte Teilluftstrom mit dem benachbarten, temperierten Teilluftstrom vermischt. Das Querströmen eines Teilluftstroms erhöht den Luftmassenstrom durch die entsprechende, mittels einer Absperrklappe verschließbare Öffnung, über welche die Luft in den nachfolgenden Luftkanal gelangt, d.h. es kann mehr warme oder kalte Luft durch die entsprechende Öffnung geleitet werden als ohne Öffnung in der die beiden Teilluftströme trennenden Wand. Hierbei ist bevorzugt die Absperrklappe, die dem querströmenden Teilluftstrom zugeordnet ist, vollständig geschlossen. Somit ergibt sich insbesondere eine schnellere Enteisung im Defrostbetrieb, eine schnellere Aufheizung im Fußraum oder eine größere Kühlleistung im maximalen Kühlbetrieb, wodurch die Fahrsicherheit erhöht und der Komfort des Insassen verbessert werden kann.

Dadurch, dass, wie insbesondere bevorzugt der von dem Gebläse kommende Luftstrom in eine Mehrzahl von Teilluftströmen unterteilt wird, auch in Bezug auf einzelne Klimazonen, kann die Temperatur an den entsprechenden Luftaustritten aus dem Luftführungsgehäuse zu den Luftkanälen, durch welche die Luft den einzelnen Ausströmern zugeführt wird, genauer bestimmt werden als bei den bislang vorgesehenen, relativ großen Mischräumen, wobei gemäß dem Stand der Technik üblicherweise je Zone nur ein Mischraum vorgesehen ist.

Der Teilluftstrom, welcher der Öffnung zum Defrost-Luftkanal zuzuführen ist, ist vorzugsweise im Luftführungsgehäuse parallel zu dem der Öffnung zum Luftkanal zu der Mittel- und Seitendüse zuzuführenden Teilluftstrom verlaufend angeordnet. Insbesondere bevorzugt sind Ebenen mit im Wesentlichen konstanter Dicke für jeden der Teilluftströme vorgesehen, wobei die Ebenen direkt benachbart stapelartig zueinander angeordnet sind. Hierbei können jedoch - insbesondere für eine Unterteilung von Fahrer- und Beifahrerseite - jeweils zwei Ebenen benachbart zueinander angeordnet sein.

Ganz besonders bevorzugt ist zur Ausbildung einer Temperaturschichtung im Frontbereich ein weiterer Teilluftstrom getrennt durch eine zweite Wand direkt benachbart des Teilluftstroms angeordnet, der üblicherweise der Mittel- und Seitendüse zugeführt wird, welcher dem Fußraum des Frontbereichs zugeführt wird. Um einen maximalen Luftmassenstrom zum Entfrosten zur Verfügung stellen zu können, ist auch in der zweiten Wand eine durch eine Klappe verschließbare Öffnung vorgesehen. Diese Klappe wird vorzugsweise ausschließlich im Defrost-Betrieb geöffnet.

Das Luftführungsgehäuse ist bevorzugt im wesentlichen spiegelbildlich zu einer Mittelebene ausgebildet, wobei eine Mittel-Trennwand für Fahrer- und Beifahrerseite vorgesehen ist. Die Mittel-Trennwand fällt im eingebauten Zustand der Klimaanlage besonders bevorzugt mit der Mittellängsebene des Fahrzeugs zusammen, kann aber auch seitlich versetzt im Fahrzeug positioniert sein.

Im Luftführungsgehäuse sind bevorzugt mindestens vier, insbesondere fünf, nahezu parallel zueinander verlaufende Teilluftströme auf der Fahrer- und Beifahrerseite vorgesehen, wobei besonders bevorzugt drei der Teilluftströme dem Frontbereich (Defrost, Belüftung, Fußraum) und zwei der Teilluftströme dem Fondbereich (Belüftung, Fußraum) zugeordnet sind. Besonders bevorzugt verlaufen die einzelnen Teilluftströme in direkt übereinander angeordneten Ebenen. Hierbei sind jedoch gewisse Umlenkungen, bspw. auf Grund einer nicht parallelen Anordnung von Verdampfer und Heizer, möglich. Insbesondere bevorzugt sind jeweils fünf nahezu parallel zueinander verlaufende Teilluftströme für die Front- und Fond-Fahrerseite und für die Front- und Fond-Beifahrerseite vorgesehen. Hierbei können jedoch die Fond-Teilluftströme zusammengelegt sein oder deren Klappen gemeinsam geregelt sein.

Im Luftführungsgehäuse sind bevorzugt für jeden Teilluftstrom zwei Temperaturklappen vorgesehen, mit welchen die Luftverteilung auf den Heizer und den Bypass um den Heizer herum regelbar ist. Insbesondere bevorzugt sind bei nahezu spiegelbildlicher Ausgestaltung der Klimaanlage zehn Teilluftströme und somit zwanzig Temperaturklappen vorgesehen. Zwar ist in diesem Fall eine Vielzahl von Klappen vorgesehen, jedoch ergibt sich eine einfache Regelung der Temperatur der einzelnen Zonen, auch im Falle von luftseitig geregelten Klimaanlagen. Bei einer in Bezug auf die Anzahl an einzelnen Klimazonen vereinfachten Ausführungsform können beispielsweise die Temperatur- und Absperrklappen der Fond-Fahrer- und -Beifahrerseite miteinander gekoppelt werden, wodurch sich die Regelung vereinfacht. Natürlich hängt die Anzahl der Temperaturklappen für die Teilluftströme von der Ausgestaltung der Klappen ab, so dass nicht notwendigerweise doppelt so viele Klappen wie Teilluftströme vorgesehen sein müssen.

Der freie Strömungsquerschnitt für den zur Öffnung zum Defrost-Luftkanal geführten Teilluftstrom ist vorzugsweise im Warmweg größer als der entsprechende freie Strömungsquerschnitt im Kaltweg ausgebildet. Durch die klappengeregelte Öffnung in der Wand, welche den der Defrost-Öffnung zuzuführenden Teilluftstrom vom dem der Front-Belüftungsöffnung zuzuführenden Teilluftstrom trennt, wird ein Querströmen der Teilluftströme ermöglicht, so dass jeweils der gesamte freie Strömungsquerschnitt beiderseits der Wand für die eine oder die andere Öffnung verwendet werden kann, d.h. der Luftmassenstrom kann in den entsprechenden Betriebszuständen erhöht werden gegenüber einem Fall ohne Öffnung in der Wand.

Bevorzugt ist der freie Strömungsquerschnitt für den zur Öffnung zum Belüftungs-Luftkanal, insbesondere für den Frontbereich, geführten Teilluftstrom im Warmweg kleiner als der entsprechende freie Strömungsquerschnitt im Kaltweg ausgebildet.

Insbesondere in Verbindung mit der Klappe in der Wand zwischen den beiden vorstehend genannten Teilluftströmen und der unterschiedlich großen freien Strömungsquerschnitte ergibt sich ein optimierter Luftmassenstrom im Defrostbetrieb und im maximalen Kühlbetrieb.

Insbesondere bevorzugt können auch in den Wänden zwischen den Teilluftströmen der dem Frontbereich zugeordneten Zone jeweils von Klappen verschließbare Öffnungen vorgesehen sein, wobei die Klappen im Defrostbetrieb geöffnet sind, so dass der gesamte, dem Frontbereich zuzuführende Luftstrom dem Defrost-Luftkanal und damit der Windschutzscheibe (und ggf. den Seitenscheiben) zugeführt wird. Dies erhöht den zur Verfügung stehenden Luftmassenstrom, so dass ein sehr schnelles Enteisen oder ein Entfernen eines Scheibenbeschlags möglich ist.

Im Folgenden wird die Erfindung anhand eines Ausführungsbeispiels mit Varianten unter Bezugnahme auf die beiliegende Zeichnung näher erläutert. In der Zeichnung zeigen:
- Fig. 1: eine perspektivische Ansicht des zentralen Teils einer Kraftfahrzeug-Klimaanlage gemäß dem Ausführungsbeispiel,
- Fig. 2: einen Schnitt entlang Linie II-II von Fig. 1 mit schematisch gestrichelt dargestellten Klappen in geöffneter oder geschlossener Stellung,
- Fig. 3: eine Fig. 2 entsprechende Darstellung in der Klappenstellung "max. Kühlen",
- Fig. 4: eine Fig. 2 entsprechende Darstellung in der Klappenstellung "Defrost",
- Fig. 5: eine Ansicht der Klimaanlage in einer Richtung, welche im eingebauten Zustand der Klimaanlage der normalen Fahrtrichtung des Fahrzeugs entspricht,
- Fig. 6: einen Schnitt entlang Linie VI-VI von Fig. 2, und
- Fig. 7: eine Fig. 5 entsprechende Ansicht einer Klimaanlage gemäß einer Variante des ersten Ausführungsbeispiels, welche für den Fondbereich keine Temperaturschichtung vorsieht.

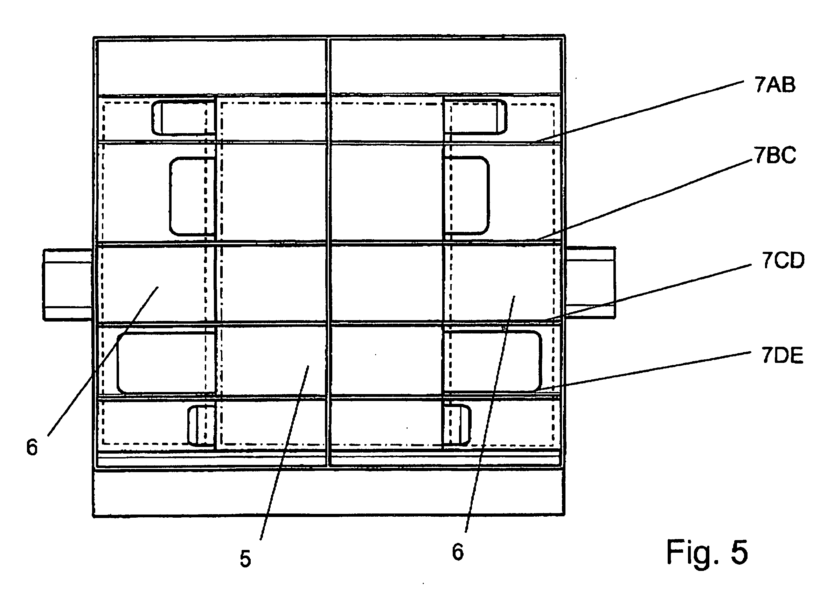

Eine vorliegend vierzonig ausgebildete Kraftfahrzeug-Klimaanlage 1 weist ein mehrteiliges Luftführungsgehäuse 2 aus Kunststoff auf, in welchem ein Verdampfer 3 und ein Heizer 4 zur Temperierung der dem Fahrzeuginnenraum zuzuführenden Luft angeordnet sind. Hierbei sind ein durch die Mittel-Trennwand zweigeteilter, vorliegend mittig angeordneter Warmweg 5, in Fig. 5 mit einer Strich-Punkt-Linie umrahmt, und rechts und links hiervon jeweils ein Kaltweg 6, in Fig. 5 jeweils mit einer gestrichelten Linie umrahmt, vorgesehen.

Die von einem Gebläse (nicht dargestellt) kommende Luft wird durch den Verdampfer 3 geleitet und anschließend über den Warmweg 5 durch den Heizer 4 oder über einen der Kaltwege 6 vorbei am Heizer 4. Der Luftstrom wird hierbei hinter dem Verdampfer 3 auf jeder Seite der Mittel-Trennwand in fünf Teilluftströme A, B, C, D, E aufgeteilt, also in insgesamt zehn Teilluftströme, wofür in Strömungsrichtung verlaufende, vorliegend horizontal angeordnete und parallel zueinander verlaufende Wände 7AB, 7BC, 7CD und 7DE im Luftführungsgehäuse 1 angeordnet sind, welche etwas beabstandet hinter dem Verdampfer 3 beginnen, durch den Heizer 4 und seitlich vorbei an demselben verlaufen, hinter dem Heizer 4 fortgeführt sind und am Luftführungsgehäuseende enden. Die Teilluftströme A, B und C sind hierbei dem Frontbereich (Zone l: Front Fahrerseite, Zone II: Front Beifahrerseite) und die Teilluftströme D und E dem Fondbereich (Zone III: Fond Fahrerseite, Zone IV: Fond Beifahrerseite) zugeordnet, d.h. bei der Wand 7CD handelt es sich um eine Zonen-Trennwand, welche die Zonen I und III sowie II und IV voneinander trennt. Die Wand 7AB, welche die Teilluftströme A und B voneinander trennt, weist im Bereich hinter dem Heizer eine in einer Öffnung angeordnete Klappe 8 auf, welche eine "Querströmung" der Luft durch die Öffnung bei bestimmten Betriebszuständen ermöglicht.

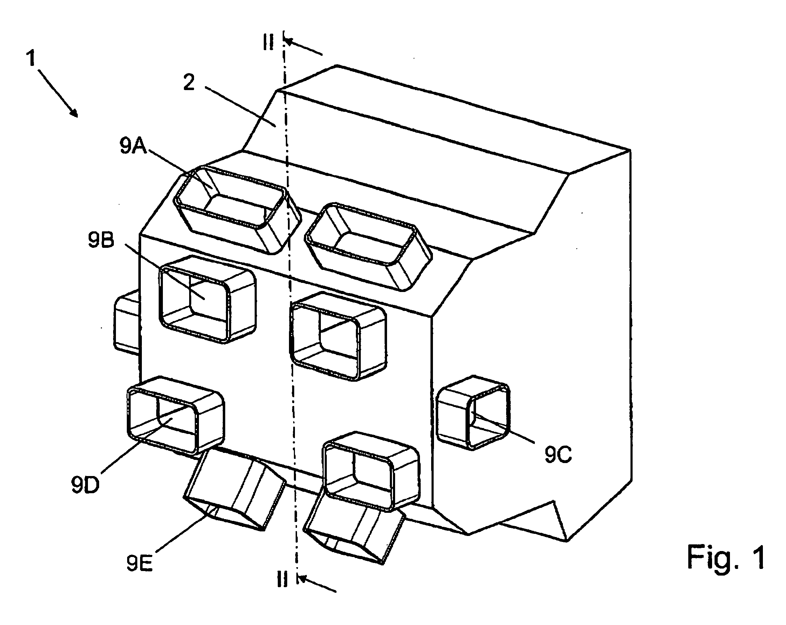

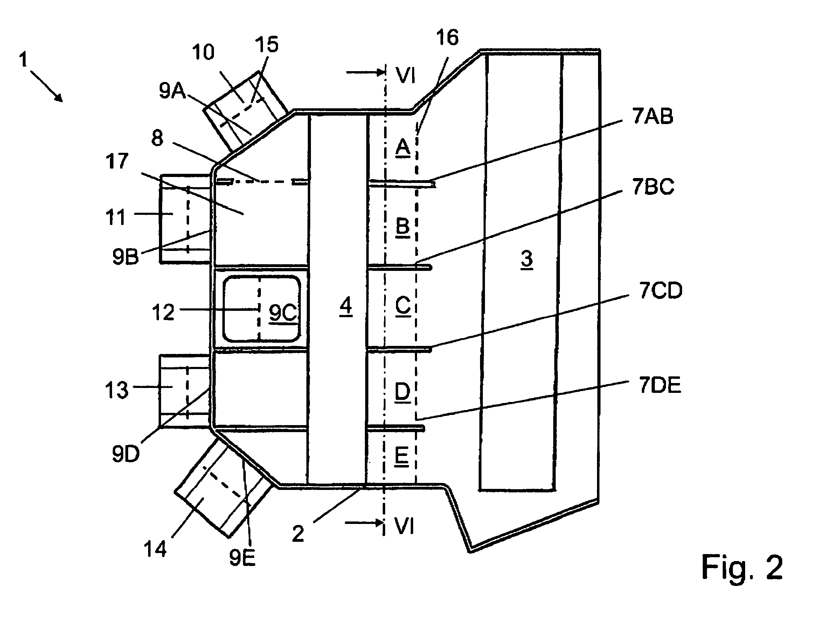

Die Ausgestaltung des Luftführungsgehäuses 1 ist, wie aus Fig. 1 ersichtlich, im Wesentlichen spiegelbildlich für die Fahrer- und Beifahrerseite, so dass im Folgenden nur auf eine Seite Bezug genommen wird. Wie aus der Darstellung von Fig. 2 ersichtlich, wird der Teilluftstrom A über eine klappengeregelte Öffnung 9A nach schräg oben in den Defrost-Luftkanal 10 geleitet. Der Teilluftstrom B wird über eine klappengeregelte Öffnung 9B in etwa waagerechter Richtung in einen Belüftungsluftkanal 11 geleitet, welcher zur Mittel- und Seitendüse führt. Der Teilluftstrom C wird über eine klappengeregelte Öffnung 9C in etwa waagerechter Richtung seitlich aus dem Luftführungsgehäuse 1 heraus in einen Belüftungsluftkanal 12 geleitet, welcher zum vorderen Fußraum führt. Der Teilluftstrom D wird über eine klappengeregelte Öffnung 9D in etwa waagerechter Richtung in einen Belüftungsluftkanal 13 geleitet, welcher zur hinteren Belüftung führt. Der Teilluftstrom E wird über eine klappengeregelte Öffnung 9E schräg nach unten in einen Belüftungsluftkanal 14 geleitet, welcher zum hinteren Fußraum führt. Die Regelung erfolgt mittels im Bereich der Öffnungen 9A, 9B, 9C, 9D und 9E angeordneter Absperrklappen 15.

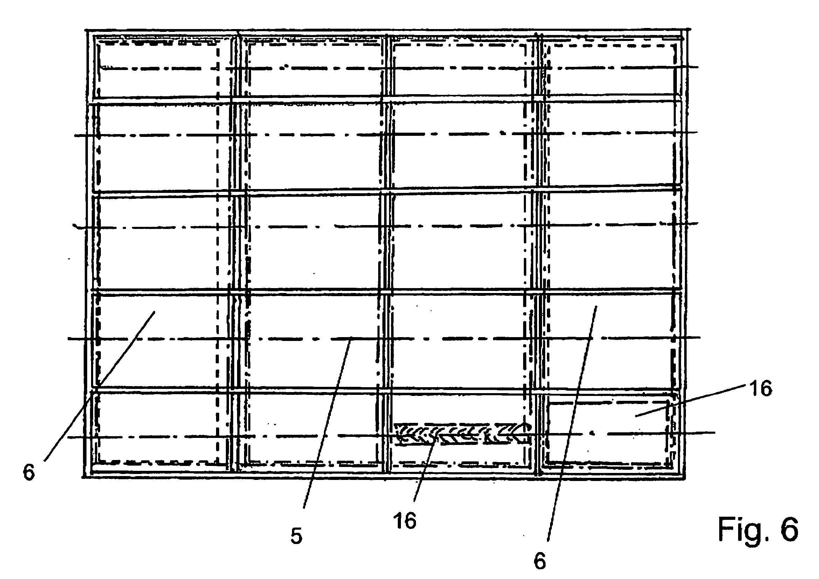

Zur Temperierung der Luft, d.h. zur Verteilung der einzelnen Teilluftströme A, B, C, D und E auf den Heizer 4 (Warmweg 5) und den Bypass zum Heizer 4 (Kaltweg 6) sind kurz nach Beginn der Wände 7AB, 7BC, 7CD, 7DE auf jeder Seite der Mittel-Trennwand, d.h. sowohl auf Fahrer- als auch auf Beifahrerseite, jeweils zwei Temperaturklappen 16 nebeneinander angeordnet, welche die Verteilung des entsprechenden Teilluftstroms A, B, C, D oder E auf den Warmweg 5 oder Kaltweg 6 regelt. In Fig. 6 ist unten rechts eine Klappenstellung angedeutet, welche einer Führung des gesamten beifahrerseitigen, dem hinteren Fußraum zuzuführenden Teilluftstroms E durch den Heizer 4 zeigt, d.h. die dem hinteren beifahrerseitigen Fußraum zugeführte Luft ist "100% warm". Die Temperaturklappen können derart ausgebildet sein, dass zwei im rechten Winkel angeordnete Klappenflächen starr miteinander verbunden sind.

Alternativ zur Darstellung von Fig. 6 können insbesondere unter Berücksichtigung des Bauraums auch andere Ausgestaltungsformen der Temperaturklappen vorgesehen sein, wobei entweder eine Temperaturklappe für jeden Teilluftstrom oder zwei in ihrer Bewegung miteinander gekoppelte (mechanisch oder auf sonstige Weise) Temperaturklappen vorgesehen sein können.

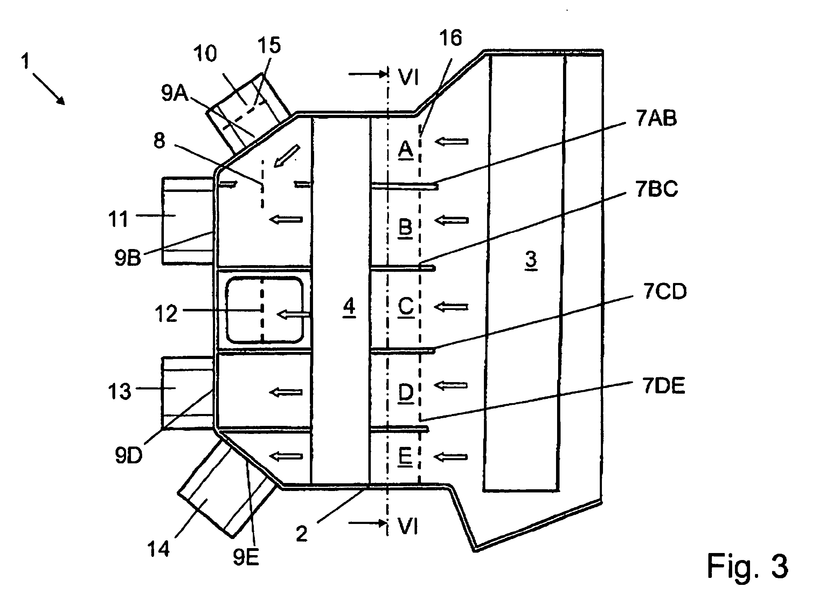

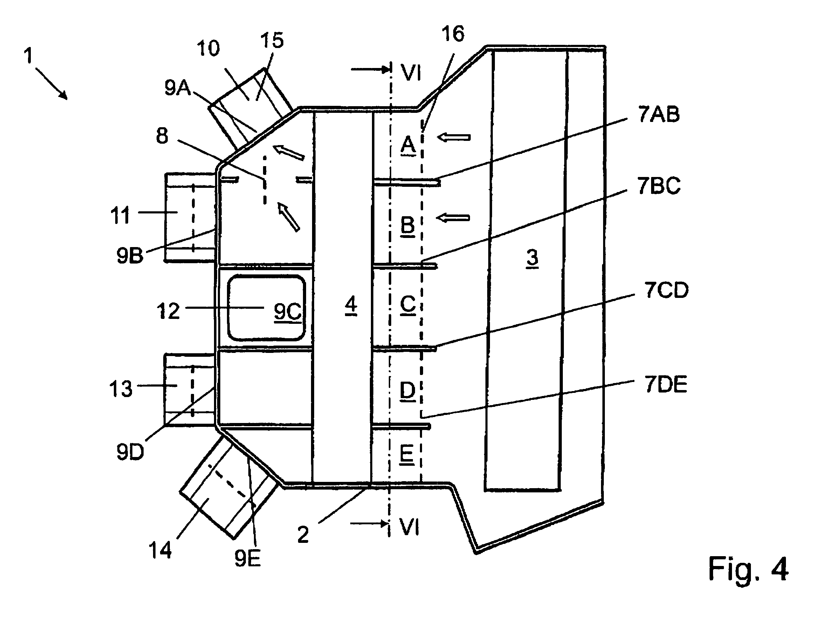

Im Folgenden werden verschiedene Betriebszustände, insbesondere in Bezug auf die Funktion der Klappe 8 in der Wand 7AB näher erläutert. In den Darstellungen der Figuren 3 und 4 sind die Stellungen der Temperaturklappen 16 nicht berücksichtigt.

Im maximalen Kühlbetrieb (Front- und Fondbereich, siehe Fig. 3) wird die gesamte Luft am Heizer 4 vorbeigeleitet, d.h. sämtliche Temperaturklappen 16, die im Bereich des Warmweges 5 angeordnet sind, sind geschlossen, und die Temperaturklappen 16, die im Bereich der Kaltwege 6 angeordnet sind, sind vollständig geöffnet. Da im maximalen Kühlbetrieb die Absperrklappe 15 zum Defrost-Luftkanal 10 geschlossen ist, ist die Klappe 8 in der Wand 7AB geöffnet, so dass die Kaltluft des Teilluftstroms A durch die entsprechende Öffnung der Wand 7AB in den benachbarten Kanal gelangt, sich mit dem kalten Teilluftstrom B vermischt und über die Mittel- und Seitendüsen dem Fahrzeuginnenraum zugeführt wird, wodurch sich die dem Fahrzeuginnenraum zugeführte Kaftluftmenge gegenüber einem Zustand, in welchem der Teilluftstrom A vollständig abgeblockt würde, vergrößert wird.

In einem Mischbetrieb (Front- und Fondbereich), bspw. 50% warm und 50% kalt, sind alle Temperaturklappen 16 halb geöffnet. Die Luft aller Teilluftströme A, B, C, D, E wird gleichmäßig auf den Heizer 4 und den Bypass zum Heizer verteilt, wobei sich die warme und kalte Luft jedes Luftstroms anschließend im entsprechenden Mischraum 17 vermischt, bevor er über die jeweilige Öffnung in den entsprechenden Luftkanal gelangt. Die Klappe 8 in der Wand 7AB ist vorliegend geschlossen, wie auch vorliegend die Absperrklappe 15 zum Defrost-Luftkanal 10. Gemäß einer alternativen Regelung ist auch in diesem Betriebszustand die Klappe 8 geöffnet, so dass der Teilluftstrom A nicht abgeblockt wird, sondern dem Teilluftstrom B beigemischt wird und über die Mittel- und Seitendüsen dem Fahrzeuginnenraum zugeführt wird.

Im Betriebszustand "maximal Heizen" (Front- und Fondbereich, entspricht der Darstellung von Fig. 3) wird die gesamte Luft durch den Heizer 4 und nicht durch die Bypässe geleitet, d.h. die Temperaturklappen 16 des Warmwegs 5 sind vollständig geöffnet und die Temperaturklappen 16 des Kaltweges 6 sind vollständig geschlossen. Ferner ist die Absperrklappe 15 zum Defrost-Luftkanals 10 geschlossen. Auch in diesem Betriebszustand kann gemäß einer alternativen Regelung der warme Teilluftstrom A dem warmen Teilluftstrom B über die Öffnung in der Wand 7AB bei geöffneter Klappe 8 zugeführt werden.

Im Defrostbetrieb (siehe Fig. 4), in welchem die Stellung der Temperaturklappen 16 der des maximalen Heizbetriebs entspricht, ist die Absperrklappe 15 zum Defrost-Luftkanal 10 geöffnet, während die Absperrklappe 15 zum Belüftungsluftkanal 11 für den Frontbereich geschlossen ist. In diesem Betriebszustand ist zur Erhöhung des maximal warmen Luftmassenstroms zur Windschutzscheibe wiederum die Klappe 8 in der Wand 7AB geöffnet, so dass der Teilluftstrom B durch die Öffnung in der Wand 7AB strömt und gemeinsam mit dem Teilluftstrom A dem Defrost-Luftkanal 10 zugeführt wird. Um einen möglichst großen Luftmassenstrom zu erreichen sind vorliegend die Absperrklappen 15, die zum Front-Fußraum und zum Fondbereich führen, geschlossen.

Dadurch, dass jeweils getrennte Teilluftströme A/B und C sowie E und D innerhalb einzelner Zonen (d.h. Front Fahrerseite, Front Beifahrerseite, Fond Fahrerseite und Fond Beifahrerseite) vorgesehen sind, lässt sich auf sehr einfache Weise eine Temperaturschichtung der Luft durch entsprechende Regelung der Temperaturklappenstellungen erreichen. So wird in einem Betriebszustand, in welchem eine Temperaturschichtung für den Front- und Fondbereich gewünscht wird, durch entsprechende Einstellung der Temperaturklappen 16 die Temperatur des Teilluftstroms B (und A), welcher zur Belüftung des Frontbereichs dient, niedriger eingestellt, als die Temperatur des Teilluftstroms C, welcher zum Frontfußraum geführt wird, und für den Fondbereich wird durch entsprechende Einstellung der Temperaturklappen 16 die Temperatur des Teilluftstroms E, welcher zur Belüftung des Fondbereichs dient, niedriger eingestellt, als die Temperatur des Teilluftstroms D, welcher zum Fondfußraum geführt wird. Somit lässt sich auf sehr einfache Weise ein hoher Komfort im Front- und Fondbereich des Fahrzeugs erzielen. Ferner kann durch das Vorsehen einer Mehrzahl getrennter, kleiner Mischräume, in welchem die warmen und kalten Teilluftströme im Falle einer Mischtemperierung miteinander vermischt werden, und dem Vorsehen möglichst nur einer Öffnung, durch welche die Luft aus dem Luftführungsgehäuse austritt und in den entsprechenden Luftkanal gelangt (der sich jedoch durchaus auch verzweigen kann) das Problem von sich ausbildenden Strömungsverläufen unterschiedlicher Temperatur, welches bei größeren Mischräumen mit mehreren Öffnungen zu unterschiedlichen Luftkanälen auftritt, vermieden werden, d.h. die Ausgestaltung des Luftführungsgehäu-ses, insbesondere der Mischräume, wie auch die Regelung der Temperaturklappen vereinfacht sich erheblich.

Gemäß einer in Bezug auf die Funktionen "Defrostbetrieb" und "max. Kühlen Front" optimierten Ausführungsform, die nicht in der Zeichnung dargestellt ist, sind die Wände (entsprechend der Wand 7AB des ersten Ausführungsbeispiels) sowie die Außenabmessungen des Luftführungsgehäuses im entsprechenden Bereich dahingehend abgewandelt, dass der Kaltweg für den Defrostbetrieb optimiert ist, d.h. die Wand im Kaltweg nach unten und die Wand im Warmweg nach oben versetzt ist, sowie seitlich/oben das Luftführungsgehäuse dem Teilluftstrom A im Kaltweg einen größeren Bereich und dem Teilluftstrom B im Warmweg einen kleineren Bereich als beim ersten Ausführungsbeispiel zur Verfügung stellt. Das heißt insbesondere, dass die freien Querschnitte eines entsprechenden Teilluftkanals durch den Heizer und die Querschnitte im Bypass hierzu unterschiedlich groß sind.

Eine entsprechende Veränderung der freien Querschnitte lässt sich auch in Bezug auf die Temperaturschichtungsfunktion realisieren, d.h. die Querschnitte der Kaltwege für die Teilluftströme B und E können gegenüber den Querschnitten der entsprechenden Warmwege vergrößert und die Querschnitte der Warmwege für die Teilluftströme C und D können gegenüber den Querschnitten der entsprechenden Kaltwege vergrößert ausgebildet sein.

Vorliegend ist der Heizer 4, wie sowohl in der Serie mit zwei Schichtungseinsätzen als auch in der nicht dargestellten Standardserie ohne Schichtungseinsätze, d.h. ohne die Trennwände 7BC und 7DE, gleich ausgebildet.

Gemäß der Variante des Ausführungsbeispiels ist der Heizer jedoch etwas höher ausgebildet als ein Heizer der Standardserie ohne Schichtungseinsätze. Ferner sind im Luftführungsgehäuse zwei Schichtungseinsätze angeordnet, welche die Trennwände 7BC und 7DE sowie das entsprechende Stück der Mittel-Trennwand, einen Teil des Luftführungsgehäuses und die entsprechenden Temperaturklappen umfassen, so dass die "Standardserie", welche keine Temperaturschichtung für den Front- und Fondbereich vorsieht, in ihrer Höhe vergrößert wird, wodurch sich der Komfort im Front- und Fondbereich erhöhen lässt.

Natürlich kann auch nur ein Schichtungseinsatz für den Frontbereich (oder entsprechend nur für den Fondbereich) vorgesehen sein, vorzugsweise in Verbindung mit einem entsprechend angepassten Heizer.

Die Anpassung des Heizers, um für eine ausreichende Temperierung sorgen zu können, kann auch durch eine Vergrößerung desselben in der Tiefe erfolgen. Bei einer Auslegung des Heizers in Bezug auf eine optimale Heizleistung im Falle des Vorsehens von Schichtungseinsätzen, kann auch der gleiche Heizer für alle Serie verwendet werden, auch wenn er ggf. für die Standardserie überdimensioniert ist, wie gemäß dem zuvor beschriebenen Ausführungsbeispiel.

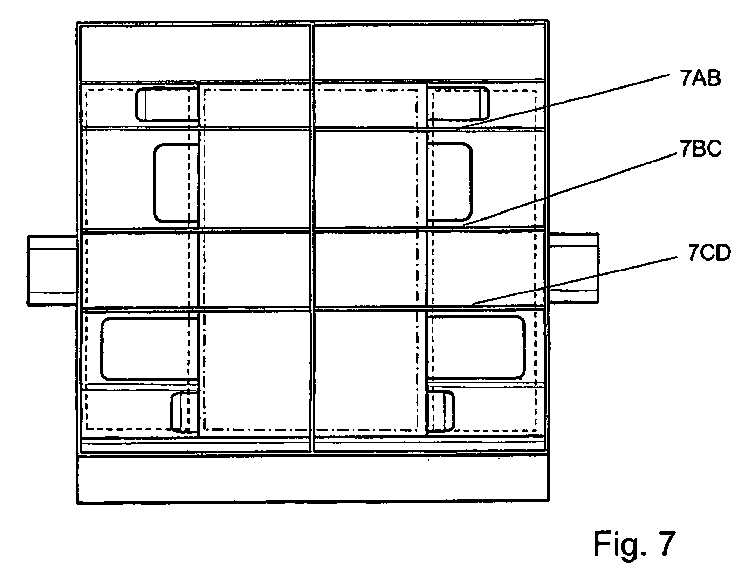

Gemäß einer Variante des Ausführungsbeispiels mit einer etwas vereinfachten Ausgestaltung der Klimaanlage, die in Fig. 7 dargestellt ist, entfällt die Wand 7DE für die Teilluftströme D und E, die dem Fondbereich (Belüftung und Fußraum) zugeführt werden, so dass im Fondbereich keine Temperaturschichtung möglich ist.

Die gleiche Funktion lässt sich alternativ auch dadurch erzeugen, dass bei einer Ausgestaltung gemäß dem zuvor beschriebenen Ausführungsbeispiel die Temperaturklappen der beiden Teilluftströme D und E miteinander gekoppelt sind, d.h. dass automatisch die gleiche Temperaturklappenstellung und somit die gleiche Temperierung von der der Belüftung dienenden Luft und der dem Fußraum zuzuführenden Luft vorgesehen ist. Das Koppeln kann in einfachster Ausgestaltungsform durch eine starr verbundene, einstückige Ausgestaltung der Temperaturklappen erfolgen, wobei die Klappenflächen in einem vorgegebenen Winkel zueinander angeordnet sind, insbesondere in einem Winkel von ca. 90°.

Bei den Wänden 7AB, 7BC, 7CD und 7DE samt Trennwand zwischen Fahrer- und Beifahrerseite handelt es sich gemäß dem Ausführungsbeispiel um ein mehrteiliges, spritzgegossenes Bauteil, welches getrennt vom übrigen Luftführungsgehäuse 2 hergestellt und im Rahmen der Montage in dasselbe eingesetzt wird. Das Bauteil ist insbesondere bevorzugt derart mehrteilig ausgebildet, dass die einzelnen Wände 7AB (mit oder ohne Klappe 8), 7BC, 7CD und 7DE- je nach Variante der Klimaanlage - modulartig zusammensetzbar sein können, wobei gemäß der einfachsten Ausgestaltungsform im gesamten Fahrzeug nur eine Klimazone vorgesehen ist (d.h. es fehlt das Bauteil vollständig), und gemäß der im oben beschriebenen Ausführungsbeispiel beschriebenen Ausgestaltungsform (d.h. die Trennwand zwischen Fahrer- und Beifahrerseite samt aller Wände 7AB-7DE sind vorhanden) sind vier Klimazonen im Fahrzeug vorhanden, wobei zusätzlich noch eine für jede Klimazone unabhängige Temperaturschichtung samt der Möglichkeit eines Querströmens der Teilluftströme A und B zur Verbesserung des Defrostverhaltens und der Beschleunigung des Abkühlens im Frontbereich vorgesehen ist.

An Stelle von einem Bauteil, welches die Wände und Trennwand bildet, kann auch ein ganzes Heizmodul vorgesehen sein, welches den Heizer, ggf. einen Zuheizer, die Wände und Trennwände sowie ggf. die Temperaturklappen umfasst. Je nach Serie kann das entsprechende Heizmodul in das entsprechend ausgebildete Luftführungsgehäuse eingesetzt werden.

### Bezugszeichenliste

1 Klimaanlage
2 Luftführungsgehäuse
3 Verdampfer
4 Heizer
5 Warmweg
6 Kaltweg
7AB, 7BC, 7CD, 7DE Wand
8 Klappe
9A, 9B. 9C, 9D, 9E Öffnung
10 Defrost-Luftkanal
11 Belüftungsluftkanal (Mittel- und Seitendüse)
12 Belüftungsluftkanal (Fußraum Front)
13 Belüftungsluftkanal (Belüftung Fond)
14 Belüftungsluftkanal (Fußraum Fond)
15 Absperrklappe
16 Temperaturklappe
17 Mischraum
A, B, C, D, E Teilluftstrom

## Patentansprüche

1. Mehrzonige Fahrzeug-Klimaanlage mit einem Luftführungsgehäuse (2), mindestens einem im Luftführungsgehäuse (2) angeordneten Verdampfer (3) und mindestens einem im Luftführungsgehäuse angeordneten Heizer (4), wobei ein Luftstrom, welcher durch die Klimaanlage (1) geleitet wird Zonen zuführbar ist, wobei eine Zone eine Zuordnung des Fahrzeuginnenraums zur Fahrerseite bzw. Beifahrerseite und zwar Frontbereich bzw. Fondbereich definiert, und durch Wände (7AB, 7BC, 7CD, 7DE) in mindestens zwei Teilluftströme (A, B, C, D, E) aufgeteilt ist, und die Teilluftströme (A, B, C, D, E) über mittels Absperrklappen (15) geregelte Öffnungen (9A, 9B, 9C, 9D, 9E) und nachfolgend angeordnete Luftkanäle (10, 11, 12, 13, 14) dem Fahrzeuginnenraum zuführbar sind,
**dadurch gekennzeichnet, dass** mindestens eine Wand (7AB, 7BC, 7DE), welche zwei Teilluftströme (A-B, B-C, D-E) voneinander trennt, innerhalb eines einer Zone (I, II, III oder IV) der Klimaanlage (1) zugeordneten Bereichs vorgesehen ist, und dass die benachbarten Teilluftströme (B-C, D-E), welche durch die innerhalb einer Zone liegende Wand (7BC, 7DE) voneinander getrennt sind, unterschiedlich temperierbar sind, wobei im Luftführungsgehäuse (1) für jeden Teilluftstrom (A, B, C, D, E) mindestens eine Temperaturklappe (16) vorgesehen ist, mit welcher die Luftverteilung auf den Heizer (4) und einen Bypass um den Heizer (4) herum regelbar ist.

2. Klimaanlage nach Anspruch 1, **dadurch gekennzeichnet, dass** zumindest die innerhalb eines einer Klimazone (I, II, III oder IV) zugeordneten Bereichs angeordnete Wand (7AB, 7BC, 7DE) durch einen getrennt ausgebildeten Einsatz gebildet ist.

3. Klimaanlage nach Anspruch 1 oder 2, **dadurch gekennzeichnet, dass** jedem Teilluftstrom (A, B, C, D, E) ein Mischraum (17) zugeordnet ist, von dem aus über eine oder mehrere Öffnungen die Luft über nachfolgend angeordnete Luftkanäle (10, 11, 12, 13, 14) dem Fahrzeuginnenraum zuführbar ist, wobei im Falle von mehreren Öffnungen für einen Teilluftstrom alle Luftkanäle vom entsprechenden Mischraum im wesentlichen in einer Ebene des Fahrzeuginnenraums in der gleichen Klimazone (I, II, III, IV) angeordnete Ausströmer aufweisen.

4. Klimaanlage nach einem der vorhergehenden Ansprüche, **dadurch gekennzeichnet, dass** im Luftführungsgehäuse (1) mindestens vier, insbesondere mindestens fünf parallel zueinander verlaufende Teilluftströme (A, B, C, D, E) vorgesehen sind, wobei mindestens zwei, insbesondere mindestens drei, der Teilluftströme (A, B, C) dem Frontbereich und mindestens zwei der Teilluftströme (D, E) dem Fondbereich zugeordnet sind, insbesondere jeweils sowohl auf der Fahrerseite als auch auf der Beifahrerseite.

5. Klimaanlage nach Anspruch 1 bis 4 **dadurch gekennzeichnet, dass** im Luftführungsgehäuse (1) für jeden Teilluftstrom (A, B, C, D, E) die zwei Temperaturklappen (16) mindestens eines Teilluftstroms starr miteinander in einer vorgegebenen Winkelstellung der Klappenflächen verbunden sind.

6. Klimaanlage nach einem der vorhergehenden Ansprüche, **dadurch gekennzeichnet, dass** in mindestens einer der Wände (7AB) in Luftströmungsrichtung gesehen hinter dem Verdampfer (3) und Heizer (4) mindestens eine Klappe (8) angeordnet ist, welche eine Öffnung in der Wand (7AB) verschließt oder freigibt, über welche eine Querströmung eines der temperierten Teilluftströme (A oder B) möglich ist, so dass sich der überströmende, temperierte Teilluftstrom (A oder B) mit dem benachbarten, temperierten Teilluftstrom (B oder A) vermischt.

7. Klimaanlage nach Anspruch 6, **dadurch gekennzeichnet, dass** die Klappe (8) in einer Wand (7AB) angeordnet ist, welche zwei einer Klimazone (I oder II) zugeordnete Teilluftströme (A und B) voneinander trennt.

8. Klimaanlage nach Anspruch 6 oder 7, **dadurch gekennzeichnet, dass** der der Öffnung (9A) zum Defrost-Luftkanal (10) zuzuführende Teilluftstrom (A) im Luftführungsgehäuse (1) parallel zu dem der Öffnung (9B) zum Luftkanal (11) zu der Mittel- und Seitendüse zuzuführenden Teilluftstrom (B) verlaufend angeordnet ist.

9. Klimaanlage nach einem der Ansprüche 6 bis 8, **dadurch gekennzeichnet, dass** der freie Strömungsquerschnitt für den zur Öffnung (9A) zum Defrost-Luftkanal (10) geführten Teilluftstrom (A) im Warmweg (5) größer als der entsprechende freie Strömungsquerschnitt im Kaltweg (6) ausgebildet ist.

10. Klimaanlage nach einem der Ansprüche 6 bis 9, **dadurch gekennzeichnet, dass** der freie Strömungsquerschnitt für den zur Öffnung (9B) zum Belüftungs-Luftkanal (11), insbesondere für den Frontbereich, geführten Teilluftstrom (B) im Warmweg (5) kleiner als der entsprechende freie Strömungsquerschnitt im Kaltweg (6) ausgebildet ist.

## Claims

1. A multi-zone vehicle air conditioning system comprising an air guide housing (2), at least one evaporator (3) disposed in the air guide housing (2), and at least one heater (4) disposed in the air guide housing, wherein an air flow which is directed through the air conditioning system (1) can be delivered to zones, wherein a zone defines an assignment of the vehicle interior to the driver's side or to the passenger's side, and to the front region, or the rear region, and is divided by walls (7AB, 7BC, 7CD, 7DE) into at least two partial air flows (A, B, C, D, E), and the partial air flows (A, B, C, D, E) can be delivered to the vehicle interior by way of openings (9A, 9B, 9C, 9D, 9E), which are regulated by blocking flaps (15), and downstream air ducts (10, 11, 12, 13, 14),
**characterized in that** at least one wall (7AB, 7BC, 7DE) which separates two partial air flows (A-B, B-C, D-E) is provided within a region assigned to a zone (I, II, III or IV) of the air conditioning system (1), and the adjacent partial air flows (B-C, D-E) which are separated from one another by the wall (7BC, 7DE) located within a zone can be temperature-controlled separately, wherein at least one temperature flap (16) is provided in the air guide housing (1) for each partial air flow (A, B, C, D, E), by way of which the air distribution to the heater (4) and around a bypass around the heater (4) can be controlled.

2. The air conditioning system according to claim 1, **characterized in that** at least the wall (7AB, 7BC, 7DE) disposed within a region assigned to a climate zone (I, II, III or IV) is formed by a separately formed insert.

3. The air conditioning system according to claim 1 or 2, **characterized in that** a mixing chamber (17) is assigned to each partial air flow (A, B, C, D, E), from which the air can be delivered to the vehicle interior by way of one or more openings via downstream air ducts (10, 11, 12, 13, 14), wherein, in the case of a plurality of openings for one partial air flow, all air ducts from the corresponding mixing chamber comprise outflow vents disposed in a plane of the vehicle interior in the same climate zone (I, II, III, IV).

4. The air conditioning system according to one of the preceding claims, **characterized in that** at least four, in particular at least five partial air flows (A, B, C, D, E) extending parallel to one another are provided in the air flow housing (1), wherein at least two, in particular at least three of the partial air flows (A, B, C) are assigned to the front region, and at least two of the partial air flows (D, E) are assigned to the front region, in particular to the driver's side as well as to the passenger's side.

5. The air conditioning system according to claim 1 to 4, **characterized in that**, in the air guide housing (1) for each partial air flow (A, B, C, D, E), the two temperature flaps (16) of at least one partial air flow are rigidly interconnected in a predefined angular position of the flap surfaces.

6. The air conditioning system according to one of the preceding claims, **characterized in that**, in at least one of the walls (7AB), at least one flap (8) is disposed behind the evaporator (3) and healer (4) as viewed in the air-flow direction, which closes or opens an opening in the wall (7AB), by way of which a cross-flow of one of the temperature-controlled partial air flows (A or B) is possible, and therefore the temperature-controlled partial air flow (A or B) flowing past mixes with the adjacent, temperature-controlled partial air flow (B or A) .

7. The air conditioning system according to claim 6, **characterized in that** the flap (8) is disposed in a wall (7AB) which separates two partial air flows (A and B) assigned to a climate zone (I or II).

8. The air conditioning system according to claim 6 or 7, **characterized in that** the partial air flow (A) to be delivered to the opening (9A) to the defrost air duct (10) is disposed in the air guide housing (1) parallel to the partial air flow (B) to be delivered to the opening (9B) to the air duct (11) to the center nozzle and the side nozzle.

9. The air conditioning system according to one of the claims 6 to 8, **characterized in that** the free flow cross section for the partial air flow (B) directed to the opening (9A) to the defrost air duct (10) in the heat path (5) is larder than the corresponding free flow cross section in the cold path (6).

10. The air conditioning system according to one of the claims 6 to 9, **characterized in that** the free flow cross section for the partial air flow (B) directed to the opening (9B) to the ventilation air duct (11), in particular for the front region, in the heat path (5) is smaller than the corresponding free flow cross section in the cold path (6).

## Revendications

1. Système de climatisation multizone d'un véhicule, comprenant une carter de guidage d'air (2), au moins un évaporateur (3) disposé dans le carter de guidage d'air (2) et au moins un dispositif de chauffage (4) disposé dans le carter de guidage d'air, où un flux d'air, qui est dirigé à travers le système de climatisation (1), peut être fourni à des zones, où une zone définit une affectation de l'habitacle du véhicule, au côté conducteur ou au côté passager et au secteur avant ou au secteur arrière, et est divisé par des parois (7AB, 7BC, 7CD, 7DE), en au moins deux flux d'air partiels (A, B, C, D, E), et les flux d'air partiels (A, B, C, D, E) peuvent être fournis à l'habitacle du véhicule, par des ouvertures (9A, 9B, 9C, 9D, 9E) réglées par des volets d'obturation (15) et par des conduits d'air (10, 11, 12, 13, 14) disposés en faisant suite à ces ouvertures,
**caractérisé en ce qu'**il est prévu, à l'intérieur d'un secteur affecté à une zone (I, II, III ou IV) du système de climatisation (1), au moins une paroi (7AB, 7BC, 7DE) qui sépare, l'un de l'autre, deux flux d'air partiels (A-B, B-C, D-E), et **en ce que** les flux d'air partiels voisins (B-C, D-E), qui sont séparés l'un de l'autre par la paroi (7BC, 7DE) se trouvant à l'intérieur d'une zone, peuvent être tempérés de façon variable, où il est prévu, dans le carter de guidage d'air (1), pour chaque flux d'air partiel (A, B, C, D, E), au moins un volet de température (16) avec lequel est réglable la répartition d'air s'appliquant au dispositif de chauffage (4) et à une dérivation tout autour du dispositif de chauffage (4).

2. Système de climatisation selon la revendication 1, **caractérisé en ce qu'**au moins la paroi (7AB, 7BC, 7DE) disposée à l'intérieur d'un secteur affecté à une zone de climatisation (I, II, III ou IV) est formée par une pièce rapportée configurée séparément.

3. Système de climatisation selon la revendication 1 ou 2, **caractérisé en ce qu'**un espace de mélange (17) est affecté à chaque flux d'air partiel (A, B, C, D, E), espace de mélange à partir duquel l'air peut être fourni à l'habitacle du véhicule par une ou plusieurs ouvertures, puis par des conduits d'air (10, 11, 12, 13, 14) disposés en faisant suite à ces ouvertures, où dans le cas de plusieurs ouvertures pour un flux d'air partiel, tous les conduits d'air de l'espace de mélange correspondant présentent des diffuseurs disposés pratiquement dans un plan de l'habitacle du véhicule situé dans la même zone de climatisation (I, II, III, IV).

4. Système de climatisation selon l'une quelconque des revendications précédentes, **caractérisé en ce qu'**il est prévus dans le carter de guidage d'air (1), au moins quatre, en particulier au moins cinq flux d'air partiels (A, B, C, D, E) s'étendant parallèlement les uns aux autres, où au moins deux, en particulier au moins trois des flux d'air partiels (A, B, C) sont affectés au secteur avant et au moins deux des flux d'air partiels (D, E) au secteur arrière, en particulier à chaque fois aussi bien sur le côté conducteur que sur le côté passager.

5. Système de climatisation selon l'une quelconque des revendications 1 à 4, **caractérisé en ce que**, dans le carter de guidage d'air (1), pour chaque flux d'air partiel (A, B, C, D, E), les deux volets de température (16) d'au moins un flux d'air partiel sont assemblés l'un à l'autre de façon fixe, suivant une position angulaire prédéfinie des surfaces de volets.

6. Système de climatisation selon l'une quelconque des revendications précédentes, **caractérisé en ce qu'**au moins un volet (8), vu dans la direction d'écoulement de l'air, est disposé, dans au moins l'une des parois (7AB), derrière l'évaporateur (3) et le dispositif de chauffage (4), volet qui ferme ou dégage une ouverture dans la paroi (7AB), ouverture par laquelle est possible un écoulement transversal de l'un des flux d'air partiels tempérés (A ou B), de sorte que le flux d'air partiel tempéré (A ou B) s'écoulant en excédent se mélange avec le flux d'air partiel tempéré voisin (B ou A).

7. Système de climatisation selon la revendication 6, **caractérisé en ce que** le volet (8) est disposé dans une paroi (7AB) qui sépare l'un de l'autre deux flux d'air partiels (A et B) affectés à une zone de climatisation (I ou II).

8. Système de climatisation selon la revendication 6 ou 7, **caractérisé en ce que** le flux d'air partiel (A) devant être fourni à l'ouverture (9A) donnant sur le conduit d'air de dégivrage (10) est disposé, dans le carter de guidage d'air (1), en s'étendant parallèlement au flux d'air partiel (B) devant être fourni à l'ouverture (9B) donnant sur le conduit d'air (11) menant à la buse centrale et latérale.

9. Système de climatisation selon l'une quelconque des revendication à à 8, **caractérisé en ce que** la section d'écoulement libre, pour le flux d'air partiel (A) guidé jusqu'à l'ouverture (9A) donnant sur le conduit d'air de dégivrage (10), est configurée, sur le trajet d'air chaud (5), en étant supérieure à la section d'écoulement libre correspondante, sur le trajet d'air froid (6).

10. Système de climatisation selon l'une quelconque des revendications 6 à 9, **caractérisé en ce que** la section d'écoulement libre, pour le flux d'air partiel (B) guidé jusqu'à l'ouverture (9B) donnant sur le conduit d'air de ventilation (11), en particulier pour le secteur avant, est configurée, sur le trajet d'air chaud (5), en étant inférieure à la section d'écoulement libre correspondante, sur le trajet d'air froid (6).
